# EUROPÄISCHE PATENTSCHRIFT

(11) **EP 1 770 457 B1**
(45) Veröffentlichungstag und Bekanntmachung des Hinweises auf die Patenterteilung: **18.02.2009**
(21) Anmeldenummer: 05021188.7
(22) Anmeldetag: 28.09.2005
(51) Int. Cl.: G05B 19/05

(54) **Peripheriebaugruppe für ein Automatisierungsgerät**
Peripheral module for an automation apparatus
Unité périphérique pour un système automatisé

(43) Veröffentlichungstag der Anmeldung: 04.04.2007
(73) Patentinhaber: SIEMENS AKTIENGESELLSCHAFT, 80333 München (DE)
(72) Erfinder: Engl, Werner, 92706 Luhe-Wildenau (DE); Grosser, Stefan, 92253 Schnaittenbach (DE); Hirmer, Gerald, 92708 Mantel (DE); Maier, Mario, 92266 Ensdorf (DE)

(56) Entgegenhaltungen:
- US-A- 5 777 557
- US-B1- 6 411 532
- US-B1- 6 605 957

## Beschreibung

Die Erfindung betrifft eine Peripheriebaugruppe für ein Automatisierungsgerät mit mindestens einem als Digitaleingang fungierenden Signalkontakt zum Anschluss eines baugruppenexternen Sensors zumindest an den Signalkontakt. Als Peripheriebaugruppe wird dabei jede Baugruppe oder jedes Modul in einem Automatisierungsgerät bezeichnet, das zum Anschluss externer Peripherie, also z.B. Aktoren und/oder Sensoren bestimmt und vorgesehen ist.

Der Begriff Peripheriebaugruppe wird dabei im Folgenden entweder für die einzelne Baugruppe oder das einzelne Modul, jeweils mit Anschlussmöglichkeit für externe Peripherie, wie z.B. Schalter, Grenzwertmelder, elektrische, hydraulische oder pneumatische Aggregate und dergleichen, oder, insbesondere im Falle von so genannten Kompaktautomatisierungsgeräten, also Geräten bei denen die Steuerungs- und Verarbeitungsfunktionalität und die Möglichkeiten zum Peripherieanschluss in einem Gerät kombiniert sind, für das gesamte Automatisierungsgerät verwendet.

Automatisierungsgeräte der Eingangs genannten Art, insbesondere in einer Ausführungsform als modulare Automatisierungsgeräte sind allgemein bekannt, z.B. in Form der Automatisierungsgeräte, die von der Anmelderin unter der Marke SIMATIC angeboten werden. Aus diesen Automatisierungsgeräten sind auch als Einzelmodule (Einzelbaugruppe) ausgeführte Peripheriebaugruppen, insbesondere Eingabebaugruppen oder kombinierte Ein-/Ausgabebaugruppen als konkretes Beispiel für eine Peripheriebaugruppe bekannt.

Aus der US 6,605,957 ist ein "logic input circuit" für ein Steuersystem mit einem aus einer Diode, einem Widerstand, einem Kondensator und einer "battery" gebildeten "energy recovery circuit" bekannt. Wenn eine an einem Eingang E1 des "logic input circuit" anliegende externe Spannung größer als eine Spannung der "battery" ist, fließt in Durchlassrichtung der Diode Strom in Richtung der "battery", so dass ein Teil einer über E1 aufgrund der Spannung eingehenden Energie von dem "energy recovery circuit" aufgefangen wird.

Die Erfindung bezieht sich speziell auf eine Peripheriebaugruppe mit mindestens einem als Digitaleingang fungierenden Signalkontakt. Bei einer solchen Peripheriebaugruppe handelt es sich entsprechend um eine Peripheriebaugruppe mit Digitaleingabe-Funktionalität. Solche Baugruppen werden häufig mit einer Mehrzahl, z.B. 16 oder 32, von Digitaleingängen ausgeführt und entsprechend als Digitaleingabebaugruppe bezeichnet. Die Digitaleingabebaugruppe ist also eine Sonderform einer Peripheriebaugruppe mit ausschließlich digitaler Eingabefunktionalität. Daneben können auch Mischformen, also z.B. Digitalein- / Ausgabebaugruppen oder Digitaleingabe- und Analogeingabebaugruppen mindestens einen als Digitaleingang fungierenden Signalkontakt aufweisen. Im Folgenden werden die von der Erfindung erfassten Peripheriegeräte entsprechend auch kurz unter dem Begriff Digitaleingabebaugruppe oder Eingabebaugruppe zusammengefasst, wobei als Kriterium stets der mindestens eine als Digitaleingang fungierende Signalkontakt im Vordergrund steht.

Die im Stand der Technik bekannten Eingabebaugruppen basieren auf dem Prinzip, dass über einen Digitaleingang, also den mit dem Signalkontakt verknüpften Eingangskanal, bei aktiviertem angeschlossenen Sensor ein Strom in die Baugruppe fließt. Im einfachsten Fall wird bei vorhandenem Stromfluss der Sensor als aktiviert erkannt. Entsprechend wird bei nicht vorhandenem Stromfluss der Sensor als deaktiviert erkannt. Es kann jedoch auch bei deaktiviertem Sensor ein Strom in die Baugruppe fließen, so dass üblicherweise der Status des Sensors an der Höhe einer Spannung, vorzugsweise anhand des Überschreitens bestimmter vorgegebener oder vorgebbarer Schwellwerte für die Spannung, die zum Treiben eines Stroms über den Signalkontakt erforderlich ist, erkannt wird.

Dieses Standardprinzip ist insoweit nicht ganz optimal, als durch den Eingangsstrom eine Verlustleistung innerhalb der Baugruppe entsteht. Bei gemäß der IEC 61131-2 vorgegebenen Standards für Spannungs- und Stromwerte an Digitaleingängen (Typ 1: High-Signal im Spannungsbereich 15V .. 30V, Eingangsstrom bei High-Signal: min. 2mA; Typ 2: High-Signal im Spannungsbereich 11V .. 30V, Eingangsstrom bei High-Signal: min. 6mA) beträgt die Verlustleistung an einem Eingangskanal des o.g. zweiten Typs, der auch zum Anschluss sog. BEROs (kontakt- und berührungslos arbeitender Sensor) geeignet ist, mindestens 30V × 6mA = 180mW. Dabei variiert die Verlustleistung noch je nach elektrischer Schaltung des Eingangskanals. Bei einem mittels einer passiven Schaltung realisierten Eingangskanal kommt es zu einer Verlustleistung von 30V x 16.4mA = 492mW. Das vorangehende Zahlenbeispiel (Verlustleistung: 180mW) bezieht sich auf eine "aktive Schaltung" mit sog. Stromsenke.

Die oben exemplarisch ausgewiesene Verlustleistung entsteht zudem pro Eingangskanal. D.h. bei einer Baugruppe mit 32 Eingangskanälen summiert sich die Verlustleistung zu 32 x 180mW = 5,76W (32 x 492mW = 15,74W). Allerdings ist im Hinblick auf eine wünschenswerte Verlustleistungsreduzierung eine Reduzierung der Höhe der Eingangsströme nicht möglich, da ansonsten eine Erfüllung der Vorgaben nach IEC 61131-2 nicht möglich ist.

Darüber hinaus ist in Betracht zu ziehen, dass Überlegungen angestrengt werden, 64-kanalige Baugruppen zu entwickeln. Hochgerechnet ergeben sich dabei Verlustleistungen von 64 × 180mW = 11,5W und 64 × 492mW = 31,5W für die Realisierung sämtlicher Eingänge mit aktiver bzw. passiver Schaltung.

Die Verlustleistung muss aus der Baugruppe abgeführt werden und bedingt dadurch eine bestimmte Baugröße für die Baugruppe. Da die theoretisch erforderlichen Baugrößen dem Trend zur Miniaturisierung widersprechen, wird häufig ein sog. "Derating" der Baugruppen vorgenommen, d.h. der Anwender muss dafür Sorge tragen, dass nur eine bestimmte, vorgegebene Anzahl von Eingangskanälen gleichzeitig (dauerhaft) eingeschaltet ist. In ungünstigen Fällen kann dies die tatsächliche Verwendbarkeit z.B. nur der Hälfte der vorhandenen Eingänge bedeuten.

Die Aufgabe der Erfindung liegt entsprechend darin, die baugruppenseitig anfallende Verlustleistung zu reduzieren um damit z.B. Baugruppen mit verringerter Baugröße oder Baugruppen mit zumindest im Wesentlichen gleich bleibender Baugröße, bei denen jedoch die gesamte oder zumindest eine höhere Anzahl von Eingangskanälen gleichzeitig verwendbar ist, realisieren zu können.

Die Erfindung schlägt zur Vermeidung oder zumindest Verringerung der o.g. Nachteile und zur Lösung der o.g. Aufgabe oder zur Lösung von Einzelaspekten der o.g. Aufgabe eine Eingangsbaugruppe mit einem verlustleistungsoptimierten Digitaleingang oder einen solchen verlustleistungsoptimierten Digitaleingang vor. Erfindungsgemäß umfasst dazu eine Peripheriebaugruppe der eingangs genannten Art eine zur Auswertung des Status des Sensors baugruppenintern vorgesehene elektrische Quelle.

Die Erfindung geht dabei von der Erkenntnis aus, dass immer wenn ein Digitaleingang Strom aufnimmt, also Strom in die Baugruppe über den Signalkontakt aufgrund einer außen (über den Sensor) anliegenden Spannung eingespeist wird, innerhalb der Baugruppe eine Verlustleistung entsteht. Gemäß der Erfindung wird dieses Prinzip umgekehrt. Die Baugruppe fungiert nicht mehr als Stromsenke sondern umfasst baugruppenintern selbst eine elektrische Quelle und fungiert damit insbesondere als Stromquelle. Die Baugruppe ist damit also in die Lage versetzt, selbst elektrische Energie, z.B. in Form von Strom und/oder Spannung auszugeben. Sie erzeugt praktisch eine Ausgangs-Leistung aus der über den oder die Signalkontakt(e) eingespeisten Leistung und verhindert oder zumindest verringert dadurch das Entstehen von Verlustleistung im Bereich der Baugruppe. Die Auswertung des Status des angeschlossenen Sensors erfolgt ebenfalls mittels der baugruppenintern vorgesehenen elektrischen Quelle.

Die im Bereich der Peripherbaugruppe entstehende Verlustleistung lässt sich damit erheblich reduzieren. Mit der Reduktion der Verlustleistung geht eine Möglichkeit zur Verringerung der Baugröße der Peripheriebaugruppe einher, da nur noch die reduzierte Verlustleistung innerhalb der Peripheriebaugruppe abzuführen ist. Darüber hinaus eröffnet die reduzierte Verlustleistung bei in etwa gleich bleibender Baugröße der Peripheriebaugruppe die Bereitstellung zusätzlicher Kanäle zum Anschluss weiterer Sensoren, wobei die Verringerung der Verlustleistung durch die Erfindung in etwa umgekehrt proportional zur möglichen Vervielfältigung der Einzelkanäle auf der Peripheriebaugruppe ist.

Insbesondere ist die elektrische Quelle zur Abgabe eines elektrischen Stroms über den Signalkontakt zur Versorgung eines an den Signalkontakt und den Massekontakt anschließbaren Sensors vorgesehen. Hier liegt die Besonderheit zum einen im Anschluss des Sensors an den Signal- und den Massekontakt, während bei den bisher bekannten Baugruppen der Eingangs genannten Art stets ein Anschluss externer Sensorik an den Signal- und einen Versorgungskontakt erfolgt.

Ferner ist die baugruppenintern vorgesehene elektrische Quelle als getaktete Konstantstromquelle ausgeführt. Dies ermöglicht eine nochmalige weitere Reduktion der baugruppenseitig anfallenden Verlustleistung, da die getaktete Konstantstromquelle sich durch einen höheren Wirkungsgrad als andere elektrische Quellen auszeichnet und aufgrund des erhöhten Wirkungsgrades die Verlustleistung, die an der getakteten Konstantstromquelle anfällt, entsprechend reduziert ist. Reduzierte Verlustleistung an der getakteten Konstantstromquelle und damit also reduzierte Verlustleistung innerhalb der Peripheriebaugruppe geht wiederum mit den Vorteilen hinsichtlich einer erreichbareren verkleinerten Bauform oder bei im Wesentlichen gleicher Bauform einer erreichbaren höhern Kanalanzahl einher.

Schließlich umfasst die elektrische Quelle, insbesondere in ihrer Ausführung als getaktete Konstantstromquelle, Verarbeitungsfunktionalität, derart, dass anhand einer Spannung, die im Betrieb zum Treiben eines Stroms über den Signalkontakt erforderlich ist, der Status des an dem Signalkontakt angeschlossenen Sensors erkennbar ist. Im Einzelnen ergeben sich dabei am Beispiel eines Schalters als einfachste Form eines Sensors Verhältnisse, wonach bei geöffnetem Schalter eine höhere Spannung zum Treiben des Stroms über den Signalkontakt erforderlich ist, während bei geschlossenem Schalter, also näherungsweise einem Kurzschluss zwischen Massekontakt und Signalkontakt, nur eine geringe Spannung zum Treiben des gleichen Konstantstroms erforderlich ist. Die jeweils erforderliche oder die jeweils von der getakteten Konstantstromquelle zum Aufrechterhalten des Konstantstroms erzeugte Spannung ist mittels der der elektrischen Quelle zugeordneten Verarbeitungsfunktionalität erkennbar. Durch das Erkennen der jeweiligen Spannung kann unmittelbar auf den Status des Sensors, also z.B. "Schalter geschlossen" oder "Schalter offen" geschlossen werden.

Vorteilhafte Ausgestaltungen der Erfindung sind Gegenstand der Unteransprüche. Bevorzugt weist die Peripheriebaugruppe einen Versorgungskontakt zum Anschluss einer Speisespannung zur Versorgung insbesondere der baugruppenintern vorgesehen elektrischen Quelle auf.

Weiter bevorzugt wird in Abhängigkeit vom mittels der Verarbeitungsfunktionalität der elektrischen Quelle erkennbaren Status des Sensors ein Auswertezweig angesteuert, der zum Transfer des erkannten Status des Sensors an eine Verarbeitungseinheit vorgesehen ist. Der durch die Verarbeitungsfunktionalität erkannte Status des Sensors wird zur weiteren Verwertung des damit erkannten Prozesssignals einer weiteren Verarbeitung, die üblicherweise durch eine sog. Zentraleinheit des Automatisierungsgerätes erfolgt, zugeführt. Dies kann, wenn die Verarbeitungsfunktionalität der elektrischen Quelle auch noch Mittel zum Speichern des erkannten Status umfasst, direkt durch Abfrage dieser Speichermittel erfolgen. Wenn die Verarbeitungsfunktionalität der elektrischen Quelle solche Speichermittel nicht umfasst, ist eine Signalisierung des erkannten Status an eine geeignete Vorrichtung mit solchen Speichermitteln erforderlich. Bevorzugt weist der zum Transfer des erkannten Status vorgesehene Auswertezweig einen Optokoppler auf, so dass innerhalb der Peripheriebaugruppe einer galvanischen Trennung zwischen einem ersten Schaltungsteil, das über den Versorgungs-, den Signal- oder den Massekontakt von außen beeinflussbar ist und einem davon unabhängigen zweiten Schaltungsteil zur Datenverarbeitung und/oder -übermittlung erfolgt. Das zweite Schaltungsteil ist dabei insbesondere zur Auswertung der jeweils erkannten Stati der einzelnen Kanäle und/oder zur Abwicklung der Übermittlung der Daten, die durch Kombination der in einer Baugruppe erfassbaren Stati zu entsprechenden Datenworten anfallen, über einen Bus entsprechend dem jeweiligen Busprotokoll vorgesehen.

Bevorzugt umfasst der Auswertezweig auch ein Anzeigeelement, z.B. eine LED, mit dem in an sich bekannter Art und Weise auf einer Außenseite der Peripheriebaugruppe der jeweils erkannte Status des angeschlossen Sensors signalisiert werden kann.

Korrespondierend zur oben beschriebenen Peripheriebaugruppe betrifft die Erfindung auch ein Verfahren zum Betrieb einer solchen Peripheriebaugruppe, wobei die elektrische Quelle einen Strom über den Signalkontakt ausgibt und wobei die Auswertung des Status eines an den Signalkontakt und den Massekontakt angeschlossenen Sensors anhand einer Spannung erfolgt, die die elektrische Quelle zum Treiben des Stroms über den Signalkontakt aufbringen muss.

Dabei erfolgt bevorzugt das Erkennen des Status des an den Signalkontakt angeschlossenen Sensors mittels einer der elektrischen Quelle zugeordneten Verarbeitungsfunktionalität anhand der Höhe der zum Treiben des Stroms über den Signalkontakt erforderlichen Spannung, wobei mittels der Verarbeitungsfunktionalität ein Transfer des erkannten Status an eine Verarbeitungseinheit erfolgt. Zum Transfer des erkannten Status an die Verarbeitungseinheit wird dabei je nach Status ein Auswertezweig aktiviert oder deaktiviert, der insbesondere einen Optokoppler oder einen Optokoppler und ein Anzeigeelement umfasst.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen
- Fig. 1: ein Prinzipschaltbild einer Digitaleingabebaugruppe gemäß dem Stand der Technik,
- Fig. 2: ein Prinzipschaltbild einer Digitaleingabebaugruppe gemäß der Erfindung mit einem einfachen Sensor und
- Fig. 3: ein Prinzipschaltbild einer Digitaleingabebaugruppe gemäß der Erfindung mit einem speziellen Sensor.

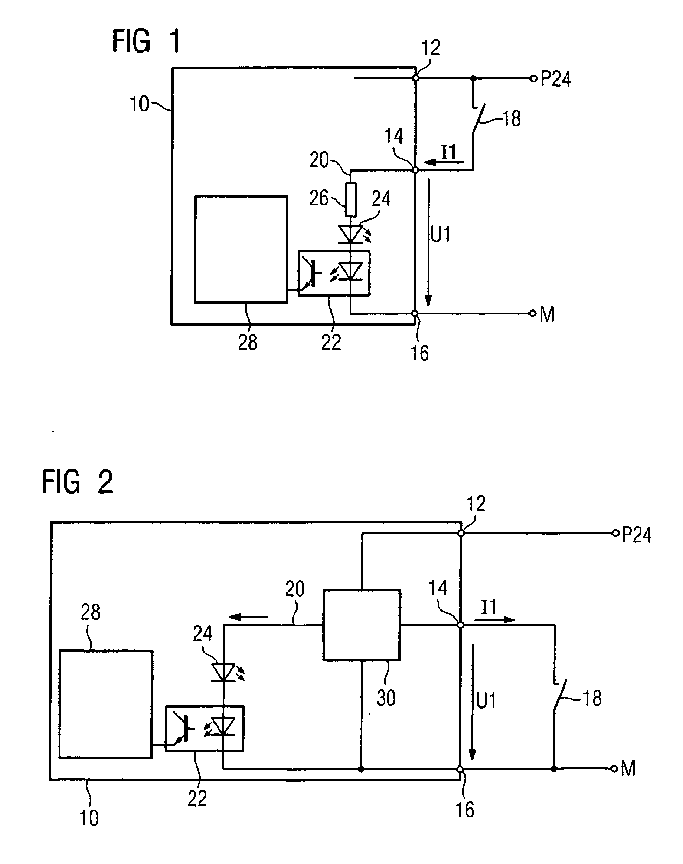

Fig. 1 zeigt ein vereinfachtes Schaltbild einer Digitaleingabebaugruppe 10 als Beispiel für eine Peripheriebaugruppe. Die Digitaleingabebaugruppe 10 umfasst einen Versorgungskontakt 12, einen Signalkontakt 14 und einen Massekontakt 16. Der Versorgungskontakt 12 ist zum Anschluss eines Versorgungspotentials, z.B. P24, vorgesehen, wobei das Versorgungspotential sowohl zur Versorgung eines zwischen Versorgungskontakt 12 und Signalkontakt 14 angeschlossenen Sensors 18 wie auch zur Versorgung der in einem Auswertezweig 20 vorgesehenen elektrischen Bauelemente, darunter unter anderem ein Optokoppler 22, eine LED als Beispiel für ein Anzeigeelement 24 und ein Widerstand 26, vorgesehen ist. Der Optokoppler 22 ermöglicht den Transfer eines erkannten Status des Sensors 18 an eine nachgeschaltete Verarbeitungseinheit 28.

Der Auswertezweig 20 erstreckt sich baugruppenintern zwischen dem Signalkontakt 14 und den Massekontakt 16. Solange der Sensor 18, im dargestellten Beispiel ein einfacher Schalter, geöffnet ist, fließt über den Auswertezweig 20 kein Strom.

Sobald der Schalter geschlossen wird, sich also der Status des Sensors 18 ändert, liegt das bisher am Versorgungskontakt 12 anliegende Potential zumindest näherungsweise auch am Signalkontakt 14 an und es kommt zu einem Stromfluss (in Fig. 1 mit I1 bezeichnet) über den Auswertezweig 20. Innerhalb der Baugruppe 10 fällt damit am Auswertezweig 20 eine Verlustleistung an, die sich bei üblicher Dimensionierung der im Auswertezweig 20 enthaltenen Bauteile 20, 22, 24 z.B. zu I1 × U1 = 6mA × 30V = 180mW ergibt. Da diese Verlustleistung für jeden Kanal einzeln entsteht, kommt es bei einer 32-kanaligen Baugruppe, zum 32-fachen dieser Verlustleistung, also circa 5,76W.

Um diese Verlustleistung abzuführen, ist bisher eine bestimmte Minimalbaugröße für die Baugruppe 10 vorgesehen. Üblich ist auch, entweder zusätzlich oder alternativ ein so genanntes Derating für die Baugruppe 10 anzugeben, d.h. dass der Anwender der Baugruppe dafür Sorge zu tragen hat, dass nur eine bestimmte Anzahl der auf der Baugruppe zur Verfügung stehenden Kanäle gleichzeitig (dauerhaft) aktiv sein, d.h. Verlustleistungswärme erzeugen darf. Diese Gesamtsituation ist von den Erfindern als nicht zufrieden stellend erkannt worden und widerspricht dem zunehmenden Trend zur Miniaturisierung von Geräten und einzeln Modulen in der Automatisierung.

Um eine kleine Baugröße für die Baugruppen 10 realisieren zu können, müsste die Verlustleistung der Digitaleingänge reduziert werden. Dabei dürfen die Eingangsströme jedoch nicht reduziert werden, da sonst vorgegebene Standards hinsichtlich Spannungshöhe und Stromstärke nicht mehr eingehalten werden. Die Erfinder haben nun erkannt, dass bei Digitaleingabebaugruppen 10 aufgrund der Stromaufnahme, also den in den Digitaleingang aufgrund einer außen angelegten Spannung hinein fließenden Strom, innerhalb der Baugruppe eine Verlustleistung entsteht, die sich prinzipbedingt nicht weiter reduzieren lässt, weil sich weder die außen angelegte Spannung noch die Stromaufnahme ohne Kollision mit den relevanten Normen, insbesondere IEC 61131.2, reduzieren lässt. Daher ist gemäß der Erfindung vorgesehen, das bisher allen Peripheriebaugruppen mit Digitaleingabefunktionalität zugrunde liegende Prinzip umzukehren, derart dass die Baugruppe 10 Strom und Spannung ausgibt.

Dazu zeigt Fig. 2 ein vereinfachtes Schaltbild einer Digitaleingabebaugruppe 10 gemäß der Erfindung. Analog zur Situation in Fig. 1 weist die erfindungsgemäße Digitaleingabebaugruppe 10 einen Versorgungskontakt 12, einen Signalkontakt 14 und einen Massekontakt 16 auf. Der Auswertezweig 20 mit Optokoppler 22 und Anzeigeelement 24 ist einer elektrischen Quelle 30 nachgeschaltet, die insbesondere als getaktete Konstantstromquelle ausgeführt ist. Der Sensor 18, im dargestellten Beispiel wieder als einfacher Schalter ausgeführt, ist im Gegensatz zur Situation in Fig. 1 nicht mehr an den Versorgungskontakt 12 und den Signalkontakt 14 sondern an den Signalkontakt 14 und den Massekontakt 16 angeschlossen. Der Versorgungskontakt 12 dient im Wesentlichen nur zur Bereitstellung einer Speisespannung zur Versorgung insbesondere der elektrischen Quelle 30. Die elektrische Quelle 30 gibt einen Strom I1 über den Signalkontakt 14 aus. Solange der als Sensor 18 dargestellte Schalter geöffnet ist, muss die elektrische Quelle 30 eine bestimmte, vergleichsweise hohe Spannung erzeugen um den Strom 11 aufrecht zu erhalten. Sobald der Schalter geschlossen wird und damit das Potential M am Digitaleingang, also am Signalkontakt 14, anliegt, ist nur noch eine erheblich verringerte Spannung erforderlich um den gleichen Strom I1 aufrecht zu erhalten. Anhand der elektrischen Quelle 30 ist damit eine Auswertung des Status des Sensors 18 möglich und zwar insbesondere derart, dass anhand einer Spannung, die im Betrieb zum Treiben des Stroms I1 über den Signalkontakt 14 erforderlich ist, der Status des an den Signalkontakt 14 angeschlossenen Sensors 18 erkennbar ist.

Im Betrieb liefert die Baugruppe 10 am Digitaleingang, also am Signalkontakt 14, den Strom I1. Dieser Strom I1 wird derart geregelt, dass er konstant bleibt. Zur Aufrechterhaltung des Stroms I1 ist bei einem als Sensor 18 angeschlossenen Schalter nur eine sehr geringe Spannung U1 erforderlich. Die Baugruppe 10 liefert z.B. an den Schalter einen Strom I1 von 6mA bei einer Spannung U1 von 100mV. Daraus ergibt sich eine Leistung von 6mA × 0,1V = 0,6mW. Diese Leistung wird innerhalb der Baugruppe 10 durch die elektrische Quelle 30, bevorzugt in ihrer Ausführungsform als getaktete Konstantstromquelle, aus der am Versorgungskontakt 12 anliegenden Versorgungsspannung (P24) erzeugt. Wenn diese Erzeugung bei einer getaktete Konstantstromquelle mit einem Wirkungsgrad von z.B. 70% erfolgt, fällt in der Baugruppe 10 nur noch die Verlustleistung von (0,3 / 0,7) × 0,6mW = 0,26mW an. Innerhalb der Baugruppe 10 entsteht pro Digitaleingang damit also z.B. eine Verlustleistung von nur noch 0,26mW. Bei einer 32-kanaligen Baugruppe ergibt sich eine Verlustleistung von 32 × 0,26mW = 8.3mW. Im Vergleich dazu ergibt sich bei Baugruppen nach dem im Stand der Technik bisher stets verfolgten Prinzip eine Verlustleistung von 5,67W.

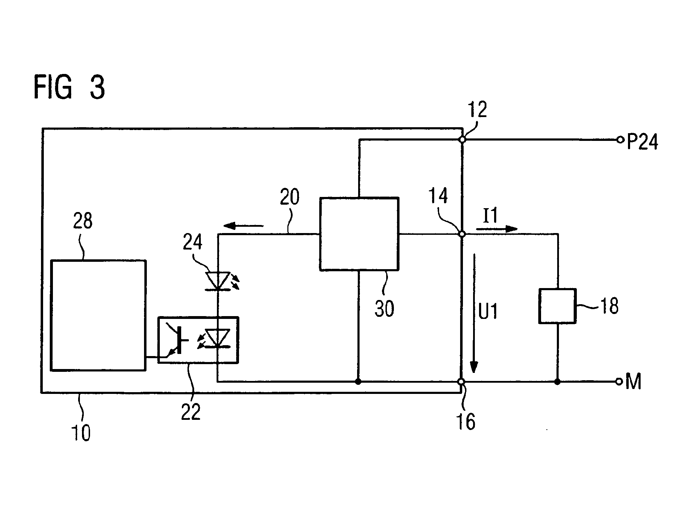

In Fig. 3 ist eine im Wesentlichen der Darstellung in Fig. 2 entsprechende Digitaleingabebaugruppe 10 gezeigt, wobei als Sensor 18 schematisch vereinfacht ein so genannter "2-Draht-BERO" gezeigt ist. Solche Sensoren 18 stellen den Hauptgrund dar, warum über den Signalkontakt 14 stets ein Minimalstrom, nämlich der Strom, der zum Betrieb des BEROs erforderlich ist, fließen muss. Damit entsteht die maximale Verlustleistung innerhalb der Baugruppe 10 auch immer dann, wenn als Sensoren 18 keine einfachen Schalter sondern solche BEROs angeschlossen sind. Diese erfordern z.B. im "offenen" Zustand für ihren Betrieb einen Strom von etwa 2mA bei einer Spannung von etwa 30V. Im "geschlossenen" Zustand begrenzt die Baugruppe 10 den Strom auf 6mA. Am BERO stellt sich dann eine Spannung von etwa 10V ein.

Ein BERO lässt im geschlossenen Zustand einen hohen Strom 11 fließen. Der Strom wird dabei baugruppenintern auf einen vorgegebenen oder vorgebbaren Maximalwert, z.B. 6mA, begrenzt. Die Restspannung U1 am BERO kann dabei bis zu 10V betragen.

Im offenen Zustand lässt der BERO nur einen geringen Strom 11 fließen (z.B. maximal 2mA). Dieser Strom I1 wird als Betriebsstrom zur Versorgung der Elektronik des BEROs verwendet. Der Strom I1 wird in diesem Fall nicht von der Baugruppe 10 begrenzt. Die Spannung U1 am BERO ist dann so groß wie die am Versorgungskontakt 12 anliegende Versorgungsspannung P24 (maximal 30V).

In beiden Fällen wird am BERO eine Verlustleistung von 2mA × 30V = 60mW bzw. 6mA x 10V = 60mW erzeugt. Diese Leistung wird innerhalb der Baugruppe durch die elektrische Quelle 30, bevorzugt in ihrer Ausführung als getaktete Konstantstromquelle, erzeugt. Wenn diese Leistung mit einem Wirkungsgrad von z.B. 70% erzeugt wird, fällt in der Baugruppe 10 eine Verlustleistung von (0,3 / 0,7) × 60mW = 26mW an. Innerhalb der Baugruppe 10 entsteht die Verlustleistung pro Digitaleingang. Bei einer 32-kanaligen Baugruppe 10 würde eine Verlustleistung von 32 x 60mW = 823mW entstehen. Bei Baugruppen nach dem bisherigen Prinzip würde im Vergleich dazu eine Verlustleistung von 5,67W entstehen.

### Damit lässt sich die Erfindung kurz wie folgt darstellen:

Es wird ein neuartiges Konzept für Peripheriebaugruppen, die zumindest einen Digitaleingabekanal umfassen, angegeben, wobei zur Vermeidung von bisher baugruppenintern anfallender Verlustleistung eine zur Auswertung des Status eines an den Digitaleingabekanal angeschlossenen Sensors 18 baugruppenintern eine elektrische Quelle 30 vorgesehen ist, so dass die Baugruppe, im Gegensatz zur Situation im Stand der Technik, keine elektrische Energie über den Digitaleingabekanal aufnimmt sondern ausgibt und damit eine Reduktion der baugruppenintern anfallenden Verlustleistung erreicht wird.

## Patentansprüche

1. Peripheriebaugruppe für ein Automatisierungsgerät mit mindestens einem als Digitaleingang fungierenden Signalkontakt (14) zum Anschluss eines baugruppenexternen Sensors (18) zumindest an den Signalkontakt (14),
**gekennzeichnet durch**
eine als getaktete Konstantstromquelle ausgeführte, baugruppeninterne elektrische Quelle (30) zur Abgabe eines elektrischen Stroms über den Signalkontakt (14) zur Versorgung eines an den Signalkontakt (14) und einen baugruppenseitigen Massekontakt (16) anschließbaren Sensors (18) und
wobei die elektrische Quelle (30) Verarbeitungsfunktionalität zur Auswertung des Status des Sensors (18) umfasst, derart dass anhand einer Spannung, die im Betrieb zum Treiben eines Stroms über den Signalkontakt (14) erforderlich ist, der Status des an den Signalkontakt (14) angeschlossenen Sensors (18) erkennbar ist.

2. Peripheriebaugruppe nach Anspruch 1 mit einem Versorgungskontakt (12) zum Anschluss einer Speisespannung zur Versorgung der elektrischen Quelle (30).

3. Peripheriebaugruppe nach einem der vorangehenden Ansprüche,
wobei in Abhängigkeit vom mittels der Verarbeitungsfunktionalität der elektrischen Quelle (30) erkennbaren Status des Sensors (18) ein Auswertezweig (20) ansteuerbar ist, der zum Transfer des erkannten Status des Sensors (18) an eine Verarbeitungseinheit (26) vorgesehen ist.

4. Peripheriebaugruppe nach Anspruch 3,
wobei der Auswertezweig (20) einen Optokoppler (22) umfasst.

5. Peripheriebaugruppe nach Anspruch 3 oder 4,
wobei der Auswertezweig (20) ein Anzeigeelement (24) umfasst.

6. Verfahren zum Betrieb einer Peripheriebaugruppe nach einem der vorangehenden Ansprüche, **dadurch gekennzeichnet,**
**dass** eine als getaktete Konstantstromquelle ausgeführte, baugruppeninterne elektrische Quelle (30) einen Strom über einen, als Digitaleingang fungierenden, Signalkontakt (14) zur Versorgung eines an den Signalkontakt (14) und einen baugruppenseitigen Massekontakt (16) anschließbaren Sensors (18) ausgibt und
wobei eine Auswertung eines Status eines an den Signalkontakt (14) und einen baugruppenseitigen Massekontakt (16) angeschlossenen Sensors (18) mittels einer Verarbeitungsfunktionalität der elektrischen Quelle (30) anhand einer durch die elektrische Quelle (30) zum Treiben eines Stroms über den Signalkontakt (14) erforderlichen Spannung erfolgt.

7. Verfahren nach Anspruch 6,
wobei zum Transfer des erkannten Status an eine baugruppeninterne Verarbeitungseinheit (28) je nach Status ein Auswertezweig (20) aktiviert oder deaktiviert wird, der einen Optokoppler (22) umfasst.

8. Verfahren nach Anspruch 7,
wobei der Auswertezweig (20) einen Optokoppler (22) und ein Anzeigeelement (24) umfasst.

## Claims

1. Input/output module for a programmable controller comprising at least one signalling contact (14) functioning as a digital input for connecting a sensor (18) which is external to the module at least to the signalling contact (14),
**characterised by**
an electrical source (30) provided internally within the module and embodied as a clocked constant current source for emitting an electric current via the signalling contact (14) to supply a sensor (18) which can be connected to the signalling contact (14) and a grounding contact (16) at the module end and
wherein the electrical source (30) comprises processing functionality for evaluating the status of the sensor (18) such that from a voltage which is required in operating mode for driving a current via the signalling contact (14), the status of the sensor (18) connected to the signalling contact (14) can be recognised.

2. Input/output module according to claim 1, with a power supply contact (12) for connecting a supply voltage for supplying the electrical source (30).

3. Input/output module according to one of the preceding claims, wherein, depending on the status of the sensor (18) which can be recognised by means of the processing functionality of the electrical source (30), an evaluation branch (20) which is provided for transferring the recognised status of the sensor (18) to a processing unit (28) can be triggered.

4. Input/output module according to claim 3, wherein the evaluation branch (20) comprises an optocoupler (22).

5. Input/output module according to claim 3 or claim 4, wherein the evaluation branch (20) comprises a display element (24).

6. Method for operating an input/output module according to any one of the preceding claims,
**characterised in that**
an electrical source (30) provided internally within the module and embodied as a clocked constant current source outputs a current via a signalling contact (14) functioning as a digital input to supply a sensor (18) which can be connected to the signalling contact (14) and a grounding contact (16) at the module end and
wherein an evaluation of a status of a sensor (18) connected to the signal contact (14) and a grounding contact (16) at the module end takes place by means of a processing functionality of the electrical source (30) from a voltage which is required by the electrical source (30) for driving a current via the signalling contact (14).

7. Method according to claim 6, wherein, in order to transfer the recognised status to a processing unit (28) which is internal within the module, an evaluation branch (20) is activated or deactivated depending on said status, which evaluation branch comprises an optocoupler (22).

8. Method according to claim 7,
with the evaluation branch (20) comprising an optocoupler (22) and a display element (24).

## Revendications

1. Module périphérique pour un appareil automatisé ayant au moins un contact de signal (14) fonctionnant comme entrée numérique en vue du raccordement d'un capteur (18) externe au module au moins au contact de signal (14),
**caractérisé par**
- une source électrique (30) réalisée comme source de courant constant à découpage, interne au module et destinée à la délivrance d'un courant électrique par l'intermédiaire du contact de signal (14) en vue de l'alimentation d'un capteur (18) raccordable au contact de signal (14) et à un contact de masse (16) du côté du module,
- la source électrique (30) comprenant une fonctionnalité de traitement pour l'évaluation de l'état du capteur (18) de telle sorte que, à l'aide d'une tension qui est nécessaire lors du fonctionnement pour l'envoi d'un courant via le contact de signal (14), l'état du capteur (18) raccordé au contact de signal (14) est reconnaissable.

2. Module périphérique selon la revendication 1, avec un contact d'alimentation (12) pour le raccordement d'une tension d'alimentation en vue de l'alimentation de la source électrique (30).

3. Module périphérique selon l'une des revendications précédentes, une branche d'évaluation (20) étant commandable en fonction de l'état du capteur (18) reconnaissable au moyen de la fonctionnalité de traitement de la source électrique (30), laquelle branche d'évaluation est prévue pour le transfert de l'état reconnu du capteur (18) vers une unité de traitement (26).

4. Module périphérique selon la revendication 3, la branche d'évaluation (20) comprenant un coupleur optoélectronique (22).

5. Module périphérique selon la revendication 3 ou 4, la branche d'évaluation (20) comprenant un élément d'affichage (24).

6. Procédé pour faire fonctionner un module périphérique selon l'une des revendications précédentes, **caractérisé par le fait qu'**une source électrique (30) réalisée comme source de courant constant à découpage et interne au module délivre un courant par l'intermédiaire d'un contact de signal (14) fonctionnant comme entrée numérique en vue de l'alimentation d'un capteur (18) raccordable au contact de signal (14) et à un contact de masse (16) du côté du module,
une évaluation d'un état d'un capteur (18) raccordé au contact de signal (14) et à un contact de masse (16) du côté du module s'effectuant au moyen d'une fonctionnalité de traitement de la source électrique (30) à l'aide d'une tension nécessaire dans la source électrique (30) pour l'envoi d'un courant via le contact de signal (14).

7. Procédé selon la revendication 6, selon lequel, pour le transfert de l'état reconnu vers une unité de traitement (28) interne au module, une branche d'évaluation (20) comprenant un coupleur optoélectronique (22) est activée ou désactivée selon ledit état.

8. Procédé selon la revendication 7, selon lequel la branche d'évaluation (20) comprend un coupleur optoélectronique (22) et un élément d'affichage (24).
